Europäisches Patentamt

European Patent Office

Office européen des brevets

(19)

(11) EP 1 288 856 A1

(12) **EUROPÄISCHE PATENTANMELDUNG**

(43) Veröffentlichungstag:
    05.03.2003 Patentblatt 2003/10

(51) Int Cl.⁷: $G06T\ 5/20$

(21) Anmeldenummer: 01118544.4

(22) Anmeldetag: 01.08.2001

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(71) Anmelder: **SIEMENS AKTIENGESELLSCHAFT
    80333 München (DE)**

(72) Erfinder:
    • **Birchbauer, Josef
      8322 Studenzen (AT)**
    • **Heschgl, Kurt
      8043 Graz (AT)**
    • **Marius, Wolfgang, Dr.
      8043 Graz/Kroisbach (AT)**
    • **Wachmann, Bernd
      8181 St. Ruprecht (AT)**

(54) **Rekonstruktion ungültiger Bildwerte in einem aus Bildpunkten zusammengesetzten Bild**

(57)     Zum Rekonstruieren eines Bildwerts für einen Bildpunkt (P0) in einem flächigen Bild, welches aus einer Anordnung von Bildpunkten besteht, wird eine lokale Orientierung ($\vartheta$) des dem Bild zugrunde liegenden Musters für den zu rekonstruierenden Bildpunktes (P0) bestimmt. Sodann werden in einer Umgebung (W2) entlang einer gemäß der lokalen Orientierung ($\vartheta$) ausgerichteten, durch diesen Bildpunkt laufenden Strecke (S2) Bildpunkte (P2) ausgewählt; über die Bildwerte der ausgewählten Bildpunkte (P2) wird ein Mittelwert bestimmt und als Bildwert dem zu rekonstruierenden Bildpunkt (P0) zugewiesen. Zur Rekonstruktion größerer Bildteile kann das Verfahren iterativ für alle ungültigen Bildpunkte ausgeführt werden.

m=3, s=2     Fig. 2

**Beschreibung**

Die Erfindung betrifft ein Verfahren zum Rekonstruieren eines Bildwerts für einen Bildpunkt in einem flächigen Bild, welches eine Anzahl von Bildpunkten mit jeweils zugeordneten Bildwerten zur Darstellung eines dem Bild zugrunde liegenden Musters, insbesondere Fingerabdruckmusters, enthält, wobei zur Rekonstruktion die Bildwerte von jeweils in einer Umgebung des zu rekonstruierenden Bildpunkts liegenden Bildpunkten verwendet werden.

Des weiteren betrifft die Erfindung ein Verfahren zum Rekonstruieren ungültiger Bildteile in einem flächigen Bild der genannten Art.

Den hier betrachteten Bildern liegen die Muster insbesondere von Fingerabdrücken zugrunde, aber auch andere Muster mit einer inhärenten Struktur wie handgeschriebene Schriften, Fotografien eines zu erkennenden Bildes (z.B. Gesichts) od.dgl. können im Rahmen der Erfindung behandelt werden. Im folgenden wird die Erfindung in erster Linie im Hinblick auf ihre Anwendung auf Fingerabdrucksmuster dargestellt, ohne dass dies eine Einschränkung ausschließlich auf solche Muster bzw. deren Bilder bedeuten soll.

Zur Erkennung eines Musters wird dieses in Form eines Bildes erfasst und das so gewonnene Bild des Musters, z.B. in Form einer Rastergraphik, der weiteren Datenverarbeitung unterworfen. Die zur Erfassung eines Musters als Musterbild verwendeten Vorrichtungen hängen vom Typ des erfassten Musters ab. Die Erfassung eines Fingerabdrucksmusters erfolgt mittels Fingerabdrucksensoren, die gewöhnlicherweise rechteckig gestaltet sind und beispielsweise eine Matrix von kapazitiven Sensorelementen enthalten, die auf einer Halbleiter-Chipfläche realisiert sind. Das Resultat der Musterfassung ist ein Bild des Musters in Form einer Datenrepräsentation, beispielsweise in Form einer Bildpunkt-Matrix enthaltend eine rechteckige Anordnung von Bildpunkten (sogenannte Pixels), welche der nachfolgenden Mustererkennung zuführbar ist. Bei anderen Mustern tritt anstelle des Fingerabdrucksensors eine entsprechende Bilderfassungseinheit.

Die Qualität von Fingerabdrucksensoren unterliegt naturgemäß fertigungsbedingten Schwankungen. Dies trifft insbesondere auf Fingerabdrucksensoren auf Siliziumbasis zu, wo Verunreinigungen des Halbleitermaterials, aber auch Alterungseffekte dazu führen können, dass einige Sensorregionen nicht das zur Bilderfassung geforderte Verhalten zeigen.

Die betroffenen Sensorzellen liefern oftmals einen vom aufgelegten Finger unabhängigen Grauwert, stören also die Fingerabdruckstruktur. Ab einer gewissen Anzahl defekter Sensorelemente ist der Sensor als Ausschuss zu klassifizieren. Die von der Bildverarbeitungssoftware maximal behandelbare Anzahl defekter Bildelemente bestimmt die Ausschussrate, und somit die Sensorausbeute bei der Produktion der Sensoren.

Ein Ansatz zur effektiven Verringerung der Ausschussrate liegt darin, die Toleranz gegenüber der Zahl der geduldeten defekten Sensorelemente dadurch zu erhöhen, dass die Bildwerte ungültiger Bildpunkte aus deren Umgebung rekonstruiert werden. Im Sinne dieses Ansatzes wird nach der Erfassung des Bildes des aufgelegten Musters eine Rekonstruktion für die Bildwerte von defekten oder aus sonstigen Gründen ungültigen Bildpunkten durchgeführt. Bekannte Konzepte der Bildrekonstruktion basieren vorwiegend auf lokalen Filteroperationen oder Spiegelung und/oder Kopieren von Bildpunkten aus der Nachbarschaft des ungültigen Bildpunkts. Da diese Ansätze nicht die Struktur des zugrunde liegenden Musters in den Restaurierungsprozess einbeziehen, sind die Kompensationsmöglichkeiten sehr beschränkt (z.B. auf ein Pixel breite Defekte), denn ansonsten würde die lokale Musterstruktur zu stark beeinträchtigt.

Es ist eine Aufgabe der Erfindung, einen Weg der Rekonstruktion aufzuzeigen, der auf die lokale Musterstruktur Rücksicht nimmt und die Rekonstruktion auch in größeren Bilddefekten ermöglicht.

Diese Aufgabe wird von einem Verfahren zum Rekonstruieren eines Bildwerts für einen Bildpunkt der eingangs genannten Art durch die folgenden erfindungsgemäßen Schritte gelöst:

> a) Bestimmen einer lokalen Orientierung des Musters für den Ort des zu rekonstruierenden Bildpunktes aufgrund von Bildwerten und/oder Muster-Orientierungen von Bildpunkten, welche in einer Umgebung des zu rekonstruierenden Bildpunkts liegen,
> b) Auswahl von Bildpunkten in einer Umgebung des zu rekonstruierenden Bildpunkts entlang einer Strecke, die durch den zu rekonstruierenden Bildpunkt verläuft und die gemäß der zuvor bestimmten lokalen Orientierung ausgerichtet ist,
> c) Ermitteln eines Mittelwerts über die Bildwerte der ausgewählten Bildpunkte und
> d) Zuweisen des so ermittelten Mittelwerts als Bildwert des zu rekonstruierenden Bildpunkts.

Diese Lösung erfüllt die gestellte Aufgabe auf einfache Weise, insbesondere wenn - wie bei der Fingerabdruckserkennung regelmäßig der Fall ist - die lokale Orientierung für die Bildpunkte ohnedies bestimmt wird. Die in den Prozessschritten des erfindungsgemäßen Verfahrens durchgeführten Operationen sind einfacher Art und lassen sich somit leicht implementieren. Durch die so erreichte Erhöhung der Toleranz gegenüber fehlerhaften Bildpunkten bzw. Bilderfassungselementen können die Fertigungskosten für eine Bilderfassungseinheit signifikant verringert werden.

In einer bevorzugten Implementation der Erfindung wird günstigerweise in Schritt b) eine Strecke mit fester, von der lokalen Orientierung unabhängige Länge unterlegt wird, wobei der zu rekonstruierende Bildpunkt im Mittelpunkt der Strecke liegt.

Besonders im Falle eines regelmäßigen Bildpunkt-Gitters ist es zweckmäßig, wenn die Länge der Strecke das (2m+1)fache des Abstandes zweier Bildpunkte ausmacht, wobei m eine natürliche Zahl ist.

Insbesondere ist es für ein Verfahren zum Rekonstruieren ungültiger Bildteile in einem flächigen Bild der eingangs genannten Art günstig, wenn zunächst ermittelt wird, welche Bildpunkte des Bildes ungültige Bildwerte aufweisen, und für jeden dieser Bildpunkte ein Bildwert gemäß dem genannten erfindungsgemäßen Verfahren rekonstruiert wird.

In einer einfachen Ausführungsform der Erfindung werden beim Ermitteln ungültiger Bildpunkte solche Bildwerte als ungültig eingestuft, die außerhalb eines festgelegten Gültigkeitsbereichs liegen.

Insbesondere zum Rekonstrieren ausgedehnter Bildbereiche ist ein iteratives Durchführen des beschriebenen erfindungsgemäßen Verfahrens zweckmäßig. Dann wird anschließend an einen ersten Verfahrensdurchlauf wie oben beschrieben neuerlich überprüft, ob die Zahl der auch nach der Rekonstruktion ungültigen Bildpunkte über einem nichtnegativen Grenzwert liegt, und falls dies zutrifft, das Verfahren für die ungültigen Bildpunkte zumindest ab Schritt b) wiederholt wird. Dabei kann günstigerweise das Verfahren so oft wiederholt werden, bis die Zahl der ungültigen Bildpunkte unter dem Grenzwert liegt und/oder gegenüber dem vorhergehenden Durchgang gleichgeblieben ist. Die Erfindung samt weiterer Vorzüge wird im folgenden anhand eines nicht einschränkenden Ausführungsbeispiels näher erläutert. Hierzu werden die beigefügten Figuren herangezogen, welche zeigen:

Fig. 1 einen Ausschnitt aus einem Bild eines Fingerabdrucks mit einem ungültigen Bildelement;

Fig. 2 die Rekonstruktion des Bildwerts für das Bildelement der Fig. 1;

Fig. 3 ein Fingerabdruckbild vor (Fig. 3a) und nach (Fig. 3b) der Rekonstruktion der gestörten Bereiche (Fig. 3c); sowie

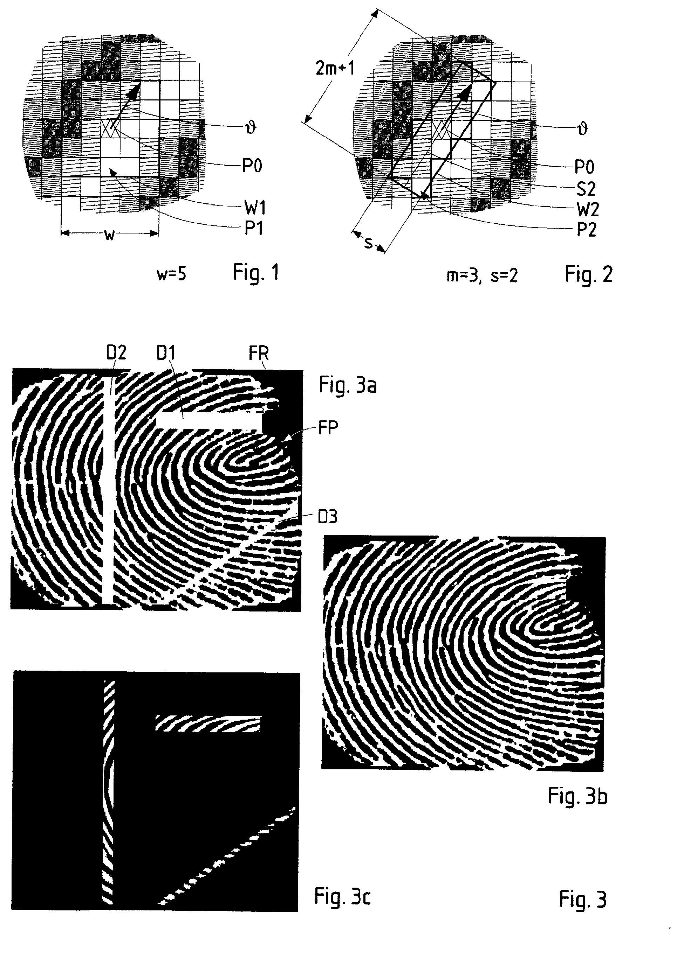

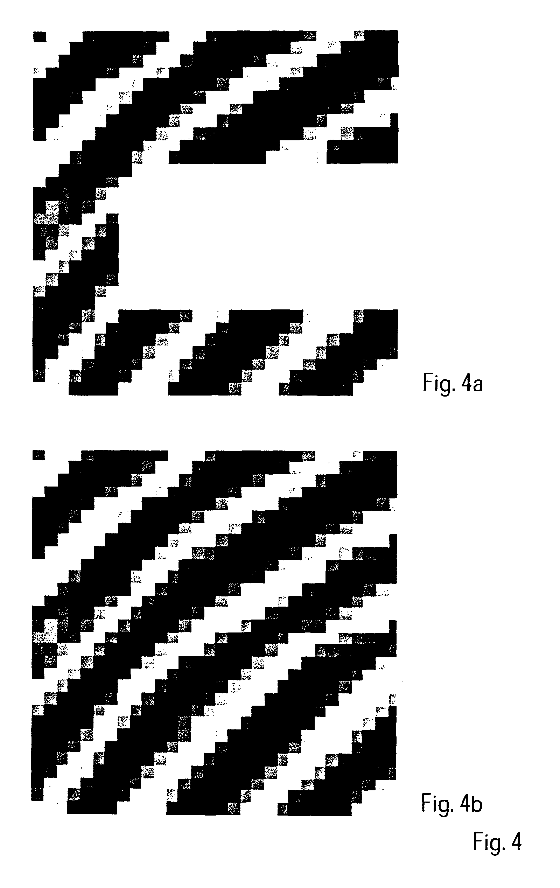

Fig. 4 Ausschnitte aus den Fingerabdruckbildern der Fig. 3. Das im Folgenden betrachtete Ausführungsbeispiel betrifft ein Bild eines Fingerabdrucksmusters, welches mit einem Fingerabdrucksensor bekannter Art erfasst wurde. Entsprechend dem Aufbau des Sensors als rechteckige Matrix von Sensorelementen, z.B. mit einer Elementdichte von ca. 500 dpi (ca. 20 Punkte/mm), ist ein solches Bild aus einer rechteckigen Anordnung von Bildelementen zusammengesetzt, die jeweils einen Bildpunkt repräsentieren. Jedem Bildpunkt ist ein Pixel mit einer Datenbreite von z.B. 8 Bit zugeordnet, womit ein Grauwert dargestellt wird. Dieser Grauwert liegt zwischen einem Minimalwert (z.B. 0, "Schwarz") und einem Maximalwert (z.B. 255, "Weiß"), wobei freilich für ein realistisches Muster die erfassten Grauwerte in einem Teilbereich dieser Skala liegen, da die beiden Extremwerte bei der (gültigen) Erfassung eines realen Fingerabdrucks nicht erreicht werden. Es sei angemerkt, dass die rechteckige Anordnung der Bildpunkte zwar weithin üblich ist, jedoch ist die Erfindung grundsätzlich nicht auf diese eingeschränkt. Ebenso müssen die Bildwerte sich im allgemeinen nicht auf eine Grauskala beziehen; vielmehr kann die Art des Bildwerts beliebig sein, sofern sich die hier beschriebenen arithmetischen Operationen (Addition/Subtraktion) durchführen lassen. Auch kann der Bildwert mehrere Komponenten enthalten (z.B. drei Farbwerte), die dann vektoriell verarbeitet werden.

Fig. 1 zeigt in schematischer Form einen beispielhaften Ausschnitt aus einem Musterbild, wobei der Bildwert der einzelnen Bildelemente durch verschieden dichte Schraffierungen angedeutet ist (weitere Schraffierung entspricht höherem Helligkeitswert, somit höherem Bildwert). Ein Bildelement P0, im Zentrum des gezeigten Ausschnitts, weist einen ungültigen Bildwert auf, der in Fig. 1 durch eine Kreuzfüllung symbolisiert ist.

Es wird im vorliegenden Verfahren vorausgesetzt, dass defekte Sensorpixel bzw. ungültige Bildelemente als solche identifiziert werden können. Dies kann im einfachsten Fall über den Grauwert erfolgen, beispielsweise dadurch, dass Bildwerte, die nicht in den für ein Fingerabdrucksmuster zu erwartenden Gültigkeitsbereich der Grauskala fallen, als ungültig klassifiziert werden. So sind z.B. in Fig. 3a die Pixelwerte in den drei gezeigten defekten Bereichen DB "zu weiß", d.h. ihr Helligkeitswert übersteigt den Maximalwert der in einem Fingerabdruckmuster auftretenden Grauskala. Auch Vorwissen über die Position etwaiger systematischer Sensorfehler oder Prüfpixel, die für den Vorgang der Fingerabdruck-Erfassung ebenfalls als defekt oder undefiniert zu klassifizieren sind, kann hierbei verwendet werden. Darüber hinaus kann auch die Güte des Orientierungsfelds (siehe unten) am Ort eines Bildpunktes als Kriterium für die Gültigkeit des Bildpunktes verwendet werden.

Das erfindungsgemäße Verfahren beruht auf der Bestimmung der lokalen Orientierung des Musters am Ort des zu rekonstruierenden Bildpunkts, bzw. in einer Umgebung um diesen. Im Falle eines Fingerabdrucks handelt es sich hierbei um das sogenannte Orientierungsfeld $\vartheta$, welches die lokale Struktur der Fingerabdrucklinien widerspiegelt. Die Berechnung des Orientierungsfeldes ist ein gängiger Schritt in fingerabdruckerkennenden Systemen, stellt für diese Muster also keinen Mehraufwand dar. Von besonderer Bedeutung in diesem Zusammenhang ist, dass das Orientierungsfeld $\vartheta$ in der Regel "glatt" ist (d.h. stückweise glatt im mathematischen Sinne). Daher kann das Orientierungsfeld aus Bereichen, in denen es bekannt ist, in angrenzende Bereiche hinaus verlängert werden, also in ungültige Teilbereiche eines Bildes interpoliert bzw. extrapoliert werden. Die Bildwerte defekter bzw. undefinierter Bildpunkte werden nicht in die Berechnung des Orientierungsfeldes einbezogen.

Ausgehend von einer vorangehenden Identifizierung defekter und/oder undefinierter Bildpunkte werden in dem vorliegenden Ausführungsbeispiel der Erfindung folgende Schritte für jeden zu rekonstruierenden Bildpunkt P0 durchgeführt:

- Berechnung des Orientierungsfeldes,
- Festlegen einer Strecke und Auswahl von Bildpunkten entlang der Strecke,
- Mittelung über die ausgewählten Bildpunkte und
- Zuweisen des Ergebnisses an den zu rekonstruierenden Bildpunkt.

Die Berechnung des Richtungsfelds $\vartheta$(P0) am Ort des Bildpunkts P0 erfolgt aufgrund einer Umgebung um den Bildpunkt P0, beispielsweise in einem Fenster W1 der Größe wxw (in Fig. 1 ist w=5) um den Punkt P0, der in der Mitte des Fensters W1 liegt, aufgrund der folgenden Formel (vgl. A. Jain und L. Hong, IEEE Trans. PAMI, 19(4), 1997):

$$\vartheta(P0) = 1/2 \cdot \arctan (Gs(W1)/Gc(W1)),$$

$$Gs(W1) = \Sigma\ 2G_x(P1)G_y(P1),$$

$$Gc(W1) = \Sigma\ (G_x^2(P1)-G_y^2(P1)),$$

wobei $G_x$(P) und $G_y$(P) die Gradienten des Bildwerts in der x- bzw. y-Richtung am Punkt P sind; die Summen bei der Berechnung der Zwischengrößen Gs und Gc werden über alle Bildpunkte P1 mit gültigen Bildwerten im Fenster W1 gebildet. In gebräuchlichen Anwendungen bei der Erkennung von Fingerabdrücken ist es ausreichend, die Orientierung $\vartheta$ mit einer endlichen Genauigkeit zu bestimmen, z.B. auf 180°/16 oder 180°/64 genau, sodass 16 bzw. 64 Orientierungen möglich sind. Die Zwischengrößen Gs und Gc können auch zur Abschätzung der Güte des Orientierungsfelds verwendet werden, die z.B. gemäß Q = Gs$^2$ + Gc$^2$ bestimmt wird.

Für die Berechnung des Orientierungsfelds auf einem Bildbereich mit defekten bzw. ungültigen Bildpunkten werden grundsätzlich die Bildwerte der gültigen Pixel in der zugrunde gelegten Umgebung verwendet, also des Fensters W1. Falls sich jedoch in der Umgebung eines Defektes P0 nicht ausreichend viele Bildpunkte P1 mit gültigen Bildwerten befinden, kann stattdessen das Orientierungsfeld $\vartheta$(P0) aus den umliegenden Werten des Orientierungsfelds interpoliert bzw. extrapoliert werden.

Anschließend wird durch den Ort des defekten Bildpunkts P0 entlang einer Geraden, deren Steigung dem Winkel $\vartheta$(P0) des Orientierungsfeldes entspricht, eine Strecke S2 der Länge 2m+1 gelegt, wobei der betreffende Bildpunkt P0 im Mittelpunkt der Strecke S2 liegt. Alle nicht gestörten Bildwerte der entlang dieser Strecke S2 liegenden Bildpunkte P2 werden gemittelt und der Bildwert des Zentralpixels P0 wird durch das Ergebnis dieser Mittelwertbildung ersetzt.

Die Menge der Bildpunkte P2, die entlang des Verlaufs der Strecke S2 ausgewählt werden, wird z.B. durch ein "nearest neighbour" oder mittels des Bresenham-Kriteriums (siehe z.B. "Algorithm for computer control of digital plotter", J.E. Bresenham, IBM Systems Journal 4:1, 25-30, 1965) bestimmt.

Im allgemeinen wird entlang der Strecke S2 eine Umgebung W2 bestimmt, anhand derer die Bildpunkte P2 für die Mittelung ausgewählt werden. So kann beispielsweise - wie in Fig. 2 gezeigt - ein rechteckiges Fenster W2 der Länge 2m+1 und der Breite s bestimmt (in Fig. 2 ist m=3 und s=2) werden, wobei die Strecke S2 die Längsachse des Fensters W2 darstellt, und es werden dann diejenigen Punkte P2 mit gültigen Bildwerten ausgewählt, deren Ort in das Fenster W2 fällt. Die Parameter m und s haben hier ganzzahlige Werte, können jedoch auch mit nichtganzen positiven Werten belegt werden.

Bei der Wahl des Längenmaßes m der Strecke S2 ist ein Kompromiss zwischen Zuverlässigkeit (kleines m) und Laufzeit (großes m) zu finden. Je größer der Wert m ist, um so leichter können auch große Fehlbereiche überbrückt werden; insbesondere verringert sich im Fall eines iterierten Verfahrens (siehe unten) mit wachsendem m auch die Anzahl der Iterationsschritte, d.h. das Verfahren konvergiert schneller. Ein kleinerer Wert für m erlaubt allerdings eine genauere Nachbildung stark gekrümmter Strukturen, wie sie etwa um den Kern eines Fingerabdrucks vorkommen. In Versuchen der Anmelderin haben sich für Sensoren mit einer Auflösung von ca. 500 dpi Werte von m=3...6, insbesondere m=4 bewährt.

Die Mittelung über die Bildwerte der ausgewählten Bildpunkte P2 erfolgt z.B. als gleichmäßige arithmetische Mittelung.

Sollte die Menge der ausgewählten Bildpunkte ungültige Punkte enthalten, so werden diese bei der Mittelung nicht berücksichtigt.

Vorteilhafterweise wird, insbesondere im Fall gehäufter defekter Bildwerte oder sogar ganzer ungültiger Flächen DB wie in Fig. 3, das Verfahren iteriert durchgeführt. In diesem Fall wird zumindest die Mittelung über die für jeden ungültigen Bildpunkt P0 ausgewählten Bildpunkte P2 und Zuweisung des jeweils gemittelten Wertes an den Bildpunkt P0 ein zweites Mal durchgeführt. Bei Bedarf kann das Verfahren auch solange wiederholt werden, bis alle Bildwerte des Fingerabdruckbilds FP gültig sind bzw. die Zahl der ungültigen Bildwerte unter einen Grenzwert R $\geq$ 0 gesunken ist, oder sich ein stabiler Zustand einstellt, bei dem sich die Anzahl ungültiger Bildwerte nicht weiter reduziert. Bei von der Anmelderin durchgeführten Versuchen wurde gefunden, dass im besonderen bei kleinen Defekten schon nach dem zweiten Durchlauf ein zufriedenstellendes Ergebnis erzielt werden konnte. Im Allgemeinen waren die Iterationstiefen bei 2 bis 10 Durchläufen.

Gemäß der Erfindung wird somit die an defekte Sensorregionen angrenzende Strukturinformation in Richtung des Orientierungsfeldes fortgesetzt und auf diese Weise der Sensordefekt überbrückt.

Fig. 3 zeigt ein Fingerabdruckbild (vergrößerte Darstellung, ursprüngliche Auflösung 500 dpi), in dem Sensordefekte simuliert und anschließend eine Bildrekonstruktion durchgeführt wurden. In Fig. 3a sind in drei jeweils mehrere Pixel breiten Bereichen D1,D2,D3 des Fingerabdrucks FP die dort befindlichen Bildpunkte auf ungültige Bildwerte gesetzt.

Fig. 3b zeigt das Ergebnis der Restaurierung, wobei die Paramterwerte w = 25, m = 4 und s = 1 waren; in Fig. 3c sind die für die defekten Bereiche rekonstruierten Bildteile gezeigt. Obwohl in den defekten Bildteilen keine verwertbare Grauwertinformation vorhanden war, konnte die Struktur der Fingerabdrucklinien vollständig rekonstruiert werden. Fig. 4a und 4b zeigen zur Verdeutlichung der Pixelstruktur stark vergrößerte Ausschnitte aus den Fig. 3a und 3b, und zwar jeweils vor und nach der Rekonstruktion einen Bereich um das linke Ende Störungsbereichs D1.

Um das Ergebnis des erfindungsgemäßen Verfahrens zu verbessern. können zusätzlich folgende Maßnahmen eingesetzt werden:

Um abrupte Grauwertänderungen an Nahtstellen der in der Mitte eines Störungsbereiches D1,D2,D3 aufeinander treffenden Strukturen (paralleles Wachstum vom Rand aus) zu vermeiden, empfiehlt sich die Durchführung eines zusätzlichen Iterationsschritts.

Durch Lokalisierung des Fingerabdrucks und Ausschließen von dem Fingerabdruck nicht zugehörenden Bereichen (schwarze Bereiche FR in Fig. 3) des Bildbereichs von der Bildrekonstruktion lässt sich der Einfluss von Randeffekten minimieren.

Um ein robusteres Verhalten gegenüber sonstigen Bildstörungen zu erreichen, empfiehlt es sich, die Mittelwertbildung auf eine nicht zu schmale Nachbarschaft der defekten Sensorpixel auszuweiten.

**Patentansprüche**

1. Verfahren zum Rekonstruieren eines Bildwerts für einen Bildpunkt (P0) in einem flächigen Bild, welches eine Anzahl von Bildpunkten mit jeweils zugeordneten Bildwerten zur Darstellung eines dem Bild zugrunde liegenden Musters, insbesondere Fingerabdruckmusters, enthält, wobei zur Rekonstruktion die Bildwerte von in einer Umgebung (W1,W2) des zu rekonstruierenden Bildpunkts (P0) liegenden Bildpunkten (P1,P2) verwendet werden, **gekennzeichnet durch** die folgenden Schritte:

   a) Bestimmen einer lokalen Orientierung ($\vartheta$) des Musters für den Ort des zu rekonstruierenden Bildpunktes (P0) aufgrund von Bildwerten und/oder Muster-Orientierungen von Bildpunkten (P1), welche in einer Umgebung (W1) des zu rekonstruierenden Bildpunkts liegen,
   b) Auswahl von Bildpunkten (P2) in einer Umgebung (W2) des zu rekonstruierenden Bildpunkts (P0) entlang einer Strecke (S2), die **durch** den zu rekonstruierenden Bildpunkt verläuft und die gemäß der zuvor bestimmten lokalen Orientierung ($\vartheta$) ausgerichtet ist,
   c) Ermitteln eines Mittelwerts über die Bildwerte der ausgewählten Bildpunkte (P2) und
   d) Zuweisen des so ermittelten Mittelwerts als Bildwert des zu rekonstruierenden Bildpunkts (P0).

2. Verfahren nach Anspruch 1,
   **dadurch gekennzeichnet, dass** in Schritt b) eine Strecke (S2) mit fester, von der lokalen Orientierung unabhängige Länge unterlegt wird, wobei der zu rekonstruierende Bildpunkt (P0) im Mittelpunkt der Strecke (S2) liegt.

3. Verfahren nach Anspruch 2,
   **dadurch gekennzeichnet, dass** die Länge der Strecke (S2) das (2m+1)fache des Abstandes zweier Bildpunkte ausmacht, wobei m eine natürliche Zahl ist.

4. Verfahren zum Rekonstruieren ungültiger Bildteile (DB) in einem flächigen Bild nach Anspruch 1,
   **dadurch gekennzeichnet, dass**
   ermittelt wird, welche Bildpunkte des Bildes ungültige Bildwerte aufweisen, und für jeden dieser Bildpunkte ein Bildwert gemäß dem Verfahren nach einem der Ansprüche 1 bis 3 rekonstruiert wird.

5. Verfahren nach Anspruch 4,
   **dadurch gekennzeichnet, dass** beim Ermitteln ungültiger Bildpunkte solche Bildwerte als ungültig eingestuft werden, die außerhalb eines festgelegten Gültigkeitsbereichs liegen.

6. Verfahren nach Anspruch 4 oder 5,
   **dadurch gekennzeichnet, dass** anschließend neuerlich überprüft wird, ob die Zahl der auch nach der Rekonstruktion ungültigen Bildpunkte über einem nichtnegativen Grenzwert liegt, und falls dies zutrifft, das Verfahren für die ungültigen Bildpunkte zumindest ab Schritt b) wiederholt wird.

7. Verfahren nach Anspruch 6,
   **dadurch gekennzeichnet, dass** das Verfahren so oft wiederholt wird, bis die Zahl der ungültigen Bildpunkte unter dem Grenzwert liegt und/oder gegenüber dem vorhergehenden Durchgang gleichgeblieben ist.

$2m+1$

$\vartheta$

$\vartheta$

P0

P0

S2

W1

W2

P1

P2

w

s

w=5   Fig. 1

m=3, s=2   Fig. 2

D2   D1   FR

Fig. 3a

FP

D3

Fig. 3b

Fig. 3c

Fig. 3

Fig. 4a

Fig. 4b

Fig. 4

Europäisches
Patentamt

**EUROPÄISCHER RECHERCHENBERICHT**

Nummer der Anmeldung

EP 01 11 8544

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 780 780 A (NIPPON ELECTRIC CO) 25. Juni 1997 (1997-06-25) <br> * Zusammenfassung * <br> * Seite 11, Zeile 7 - Seite 12, Zeile 30 * <br> * Seite 16, Zeile 29 - Zeile 34 * <br> * Seite 17, Zeile 11 - Zeile 40 * | 1-7 | G06T5/20 |
| A | NAKAMURA O ET AL: "A RESTORATION ALGORITHM OF FINGERPRINT IMAGES" SYSTEMS & COMPUTERS IN JAPAN, SCRIPTA TECHNICA JOURNALS. NEW YORK, US, Bd. 17, Nr. 6, 1986, Seiten 31-39, XP000610269 ISSN: 0882-1666 <br> * Zusammenfassung * <br> * Seite 35, Absatz 3.3 - Seite 37, Absatz 3.5 * | 1-7 | |
| A | US 5 187 747 A (CAPELLO RICHARD D ET AL) 16. Februar 1993 (1993-02-16) <br> * Zusammenfassung * <br> * Spalte 3, Zeile 35 - Spalte 4, Zeile 3 * <br> * Spalte 15, Zeile 50 - Spalte 16, Zeile 16 * <br> * Spalte 52, Zeile 40 - Spalte 53, Zeile 33 * | 1-7 | **RECHERCHIERTE SACHGEBIETE (Int.Cl.7)** <br><br> G06T |

Der vorliegende Recherchenbericht wurde für alle Patentansprüche erstellt

| Recherchenort | Abschlußdatum der Recherche | Prüfer |
|---|---|---|
| DEN HAAG | 26. Februar 2002 | Gonzalez Ordonez, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 8544

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0780780 | A | 25-06-1997 | JP | 2739856 B2 | 15-04-1998 |
| | | | JP | 9167230 A | 24-06-1997 |
| | | | AU | 708216 B2 | 29-07-1999 |
| | | | AU | 7534996 A | 26-06-1997 |
| | | | CA | 2192525 A1 | 19-06-1997 |
| | | | EP | 0780780 A2 | 25-06-1997 |
| | | | KR | 214736 B1 | 02-08-1999 |
| | | | US | 6118891 A | 12-09-2000 |
| | | | US | 5937082 A | 10-08-1999 |
| US 5187747 | A | 16-02-1993 | US | 4876726 A | 24-10-1989 |
| | | | AT | 103086 T | 15-04-1994 |
| | | | BR | 8705282 A | 09-02-1988 |
| | | | DE | 3789324 D1 | 21-04-1994 |
| | | | DE | 3789324 T2 | 08-09-1994 |
| | | | EP | 0229028 A2 | 15-07-1987 |
| | | | JP | 63502382 T | 08-09-1988 |
| | | | WO | 8704279 A1 | 16-07-1987 |

EPO FORM P0461

Für nähere Einzelheiten zu diesem Anhang : siehe Amtsblatt des Europäischen Patentamts, Nr.12/82